(19) Europäisches Patentamt
European Patent Office
Office européen des brevets

(11) **EP 2 980 558 B1**

(12) **EUROPEAN PATENT SPECIFICATION**

(45) Date of publication and mention
of the grant of the patent:
**06.11.2019 Bulletin 2019/45**

(51) Int Cl.:
**G01N 15/10** *(2006.01)*      **G01N 15/12** *(2006.01)*
**G01N 15/00** *(2006.01)*

(21) Application number: **14776330.4**

(22) Date of filing: **07.02.2014**

(86) International application number:
**PCT/JP2014/000666**

(87) International publication number:
**WO 2014/155932 (02.10.2014 Gazette 2014/40)**

(54) **MEASUREMENT DEVICE AND MEASUREMENT METHOD**

MESSVORRICHTUNG UND MESSVERFAHREN

DISPOSITIF DE MESURE ET PROCÉDÉ DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2013 JP 2013063515**

(43) Date of publication of application:
**03.02.2016 Bulletin 2016/05**

(73) Proprietor: **Sony Corporation
Tokyo 108-0075 (JP)**

(72) Inventors:
• **KATSUMOTO, Yoichi
Tokyo 108-0075 (JP)**
• **SATO, Kazumasa
Tokyo 108-0075 (JP)**
• **BRUN, Marc-Aurele
Tokyo 108-0075 (JP)**

(74) Representative: **D Young & Co LLP
120 Holborn
London EC1N 2DY (GB)**

(56) References cited:
**EP-A1- 2 259 044      EP-A1- 2 378 283
JP-A- 2010 181 399      JP-A- 2012 098 075**

• **Y Katsumoto ET AL: "SINGLE CELL DIELECTRIC
SPECTROSCOPY IN A MICRO-CHANNEL", , 2
October 2011 (2011-10-02), XP055258691,
Retrieved from the Internet:
URL:http://www.rsc.org/images/LOC/2011/PDF
s/Papers/206_0355.pdf**
• **HOLMES D ET AL: "Label-Free Differential
Leukocyte Counts Using a Microfabricated,
Single-Cell Impedance Spectrometer",
SENSORS, 2007 IEEE, IEEE, PI, 28 October 2007
(2007-10-28), pages 1452-1455, XP031221347,
ISBN: 978-1-4244-1261-7**
• **ASHISH V JAGTIANI ET AL: "An impedimetric
approach for accurate particle sizing using a
microfluidic Coulter counter;An impedimetric
approach for accurate particle sizing using a
microfluidic Coulter counter", JOURNAL OF
MICROMECHANICS & MICROENGINEERING,
INSTITUTE OF PHYSICS PUBLISHING, BRISTOL,
GB, vol. 21, no. 4, 24 March 2011 (2011-03-24) ,
page 45036, XP020188929, ISSN: 0960-1317, DOI:
10.1088/0960-1317/21/4/045036**

EP 2 980 558 B1

## Description

Technical Field

The present technique relates to a measurement apparatus and a measurement method for measuring an electrical amount of particles such as blood cells.

Background Art

In general, a counting apparatus for particles such as blood cells includes a flow channel including a narrow tube section such as an orifice and an aperture, and, when particles pass through the narrow tube section, an impedance of the narrow tube section changes according to an area blocked by the particles themselves. The counting apparatus detects the impedance change of the narrow tube section by causing a DC electricity to flow between electrodes respectively provided on an inlet side and outlet side of the narrow tube section in the flow channel, to thus measure the number of particles.

In actuality, however, it is extremely difficult to measure an impedance of the narrow tube section using a metal electrode. This is because an impedance due to an electrical double layer capacitance generated on a metal surface inevitably exists.

In this regard, an apparatus disclosed in Patent Document 1 uses an AC coupling capacitor. Specifically, the apparatus detects as a voltage fluctuation, by applying a DC electricity between electrodes as in a generally-used apparatus, a fluctuation amount obtained by removing a DC component by the AC coupling capacitor from a fluctuation amount of an entire impedance of a system including an orifice in a flow cell, that is, a system including an electrical double layer (see, for example, L.22 on left column of P.4 in specification of Patent Document 1).

Patent Document 1: Patent No. 2815435 Holmes D et al. "Label-free Differential Leukocyte Counts Using a Microfabricated, Single-Cell Impedance Spectrometer", SENSORS 2007 IEEE, discloses a microfluidic device for high-speed impedance analysis of individual cells.

Y Katsumoto et al. "Single Cell Dielectric Spectroscopy in a Micro-Channel", 2 October 2011 (15th Int. Conf. on Miniaturized Systems for Chemistry and Life Sciences) discloses a microfluidic device designed to suppress the influence of electrode polarization on the dielectric spectra of single cells.

EP 2 378 283 A1 discloses a flow channel device and dielectric cytometry system for measuring the dielectric spectrums of individual cells.

Summary of Invention

Problem to be solved by the Invention

However, since only the voltage fluctuation amount is detected via the AC coupling capacitor in the apparatus disclosed in Patent Document 1, it is necessary to apply a high voltage between the electrodes for a highly accurate detection. When a high DC voltage is applied between the electrodes as described above, air bubbles are generated from the electrodes due to an electrolysis. To remove such air bubbles, a vessel of a relatively large volume, that has an upper portion opened to atmosphere or has a sufficient space to hold generated air even when sealed becomes necessary.

Therefore, the present technique aims at providing a measurement apparatus and a measurement method that are capable of suppressing generation of air bubbles in a flow channel.

Means for solving the Problem

To attain the object above, according to the present technique, there is provided a measurement apparatus according to claim 1.

By using the AC voltage having a frequency satisfying the condition mentioned in claim 1, the present technique can use an AC voltage that does not cause an electrolysis instead of a DC voltage. Therefore, there is no need to detect a voltage fluctuation amount via an AC coupling capacitor as in the related art. As a result, since generation of air bubbles is suppressed, a compact flow channel device can be used.

The measurement section may include a measurement circuit including the measurement electrode section and detect a current flowing through the measurement circuit to calculate the conductance of the fluid including the particles in the narrow channel based on the detected current. By carrying out a predetermined operation using the conductance measured by the measurement section, the measurement apparatus can easily specify the number or type of particles.

The measurement apparatus may further include an analysis section that monitors a time elapse of the conductance and calculates the size of the particles based on a peak value of the conductance. By detecting the peak value of the conductance, the analysis section can calculate the size of the particles using a predetermined relational expression as follows.

The analysis section may calculate the size of the particles using a function that uses at least the conductance and the peak value of the conductance as a parameter.

The particles are blood cells of a living body, and in such a case, the generation section may generate an AC voltage having a frequency range of 100 Hz or more and 1 MHz or less. Alternatively, the generation section may generate an AC voltage having a frequency range of 100 kHz or more and 500 kHz or less.

The measurement apparatus according to claim 1 comprises a flow channel device that includes a first flow channel, and a second flow channel connected to the first flow channel via the narrow channel. The narrow channel and the second flow channel are provided such that a flow including a velocity component orthogonal to a velocity component of the fluid in the narrow channel is formed in the second flow channel. With this structure, a crossflow can be formed by the narrow channel and the second flow channel, and a "return" phenomenon of the particles is suppressed so as to enhance a measurement accuracy of the electrical amount by the measurement section.

The flow channel device may further include an operation electrode section that causes a dielectrophoretic force to act on the particles in the flow channel. In this case, the measurement apparatus may further include a controller that outputs an operation voltage signal to the operation electrode section based on the electrical amount measured by the measurement section. With this structure, the particles can be sorted based on the measured electrical amount.

According to the present technique, there is further provided a measurement method according to claim 8.

Effect of the Invention

According to the present technique, the generation of air bubbles in the flow channel can be suppressed.

Brief Description of Drawings

Fig. 1 is a block diagram showing a structure of a measurement apparatus according to a first embodiment of the present technique.
Fig. 2 is a schematic cross-sectional diagram of a flow channel device taken along a direction of a flow channel.
Fig. 3 is a plan view of a second flow channel showing a vicinity of a narrow channel.
Fig. 4A schematically shows a state of an electrical force line in a case where, when a cell in an electrolyte is between measurement electrodes, a measurement voltage of a low frequency range is applied between the electrodes. Fig. 4B schematically shows a state of the electrical force line in a case where a measurement voltage of a high frequency range is applied between the electrodes.
Fig. 5 shows an electrical equivalence circuit between the measurement electrodes in a case where an electrical double layer is caused.
Fig. 6 is an equivalence circuit obtained by additionally simplifying the equivalence circuit shown in Fig. 5.
Fig. 7 is a schematic diagram showing an example of a size of a narrow channel structure.
Fig. 8 is a graph showing a relationship between a frequency of the measurement voltage and a conductance of the entire system including the electrical double layer in a flow channel not including a narrow channel structure and a flow channel including the narrow channel structure as in this embodiment.
Fig. 9 shows a measurement circuit as an example of hardware included in a measurement device.
Fig. 10 is a schematic diagram showing a time-series waveform of measurement plots of the conductance measured by the measurement device.
Fig. 11 shows an example of a histogram of various particles, blood cells herein, that is obtained by a histogram operation section.
Figs. 12A to 12C are schematic plan views each showing a flow channel device according to another embodiment.
Fig. 13 is a block diagram showing a structure of a measurement apparatus according to a second embodiment of the present technique.
Fig. 14 is a cross-sectional diagram of a flow channel device of the measurement apparatus shown in Fig. 13 taken along the x direction.
Fig. 15 is a plan view of a second flow channel and branch section of the flow channel device shown in Fig. 13.

Modes for Carrying Out the Invention

Hereinafter, embodiments of the present technique will be described with reference to the drawings.

[Measurement apparatus according to first embodiment]

(Structure of measurement apparatus)

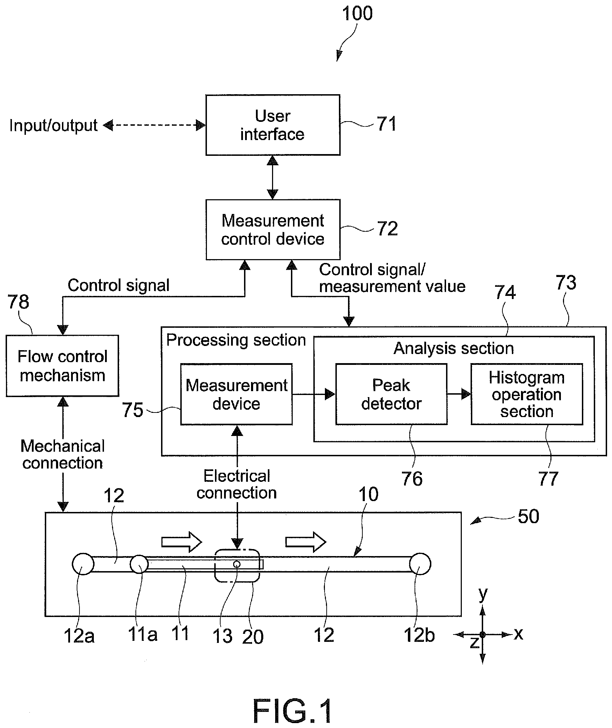

Fig. 1 is a block diagram showing a structure of a measurement apparatus according to a first embodiment of the present technique. The measurement apparatus 100 mainly includes a flow channel device 50, a processing section 73 electrically connected to the flow channel device 50, and a flow control mechanism 78 that controls a fluid of the flow channel device 50.

A user can input information to a measurement control device 72 using a user interface constituted of a keyboard, a mouse, a touch panel, and the like. The measurement control device 72 outputs a control signal corresponding to the input information to the processing section 73 or acquires a measurement value of an electrical amount to be described later or the like measured by the processing section 73 and other data. The measurement control device 72 may also output information output from the processing section 73 and the flow control mechanism 78 to a higher-order apparatus, for example, so that the information is put to a presentable state with respect to the user.

The measurement control device 72 and the processing section 73 are each mainly constituted of a computer such as a PC and a dedicated apparatus. The measurement control device 72 and the processing section 73 may be physically apart or may be integrated.

The flow channel device 50 is mechanically connected mainly to the flow control mechanism 78 that controls a flow of the fluid in the flow channel device 50. The flow control mechanism 78 includes a pump, a flowmeter, and a pressure meter.

The flow channel device 50 is formed as a chip and includes a flow channel 10. Through the flow channel 10, a fluid including particles as a sample flows. The flow channel 10 is a micro flow channel having a small width of about 30 to 200 μm, for example. The particles as a sample are cells of a living body (e.g., human or animal) such as white blood cells and red blood cells. When the particles are cells, a normal saline solution is used as the fluid, for example.

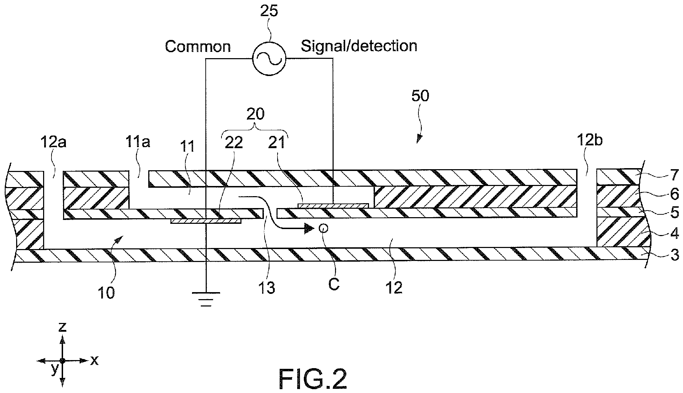

Fig. 2 is a schematic cross-sectional diagram of the flow channel device 50 taken along a direction of the flow channel 10. The flow channel device 50 is constituted of a plurality of resin films 3 to 7 laminated on top of one another, for example. Specifically, the flow channel device 50 is formed by forming various electrodes, grooves, holes, and the like on those films by photolithography, etching, and the like, and positioning and heat pressure bonding the resin films.

Measurement electrodes 21 and 22 of a measurement electrode section 20 to be described later are formed of, for example, copper, silver, gold, platinum, nickel, zinc, titanium, or stainless steel, or may be formed by carrying out various types of plating processing.

As the materials of the resin films 3 to 7, a polyimide film, a thermoplastic polyimide film, a PDMS (polydimethylsiloxane or dimethylpolysiloxane), acrylate, PES (polyethersulphone), polycarbonate, polypropylene, polystyrene, polyimide, COP (cyclic olefin polymer), COC (cyclic olefin copolymer), and the like are used. In this embodiment, one of the materials described above is selected as a common material of the resin films 3, 5, and 7, and a material different from that of the resin films 3, 5, and 7 is selected as a common material of the resin films 4 and 6.

The flow channel device 50 includes the flow channel 10 provided in a double layer in a thickness direction of the flow channel device 50. In Fig. 2, a first flow channel 11 on an upper side includes a first inlet 11a, and a fluid including particles C flows into the first flow channel 11 via the first inlet 11a using a pipette, a pump included in the flow control mechanism 78, and the like. It is favorable to cause a constant amount of fluid to flow into the first inlet 11a using a syringe pump or the like so as to align individual particles along a flow direction in the first flow channel 11.

A second flow channel 12 provided on a lower side includes a second inlet 12a. A fluid not including particles flows into the second flow channel 12 via the second inlet 12a using a pump (not shown) included in the flow control mechanism 78 or other apparatuses. It is favorable for the pressure of the fluid that flows into the second flow channel 12 via the second inlet 12a to be constant.

As shown in Fig. 1, the second inlet 12a is an upstream edge of the flow channel 10. On a downstream side of the second inlet 12a, the measurement electrode section 20 for measuring an electrical amount at predetermined positions of the flow channel 10 is provided. Also at a downstream edge of the second flow channel 12, a drainage port 12b for discharging the particles and fluid outside the flow channel 10 is provided. A particle receiver for accumulating particles may be provided in the flow channel 10 between the measurement electrode section 20 and the drainage port 12b, for example.

As shown in Fig. 2, the first flow channel 11 and the second flow channel 12 are in communication with each other via the narrow channel 13. The narrow channel 13 has a flow channel size sufficient to cause a single particle to flow through, for example, and individual particles C that flow through the first flow channel 11 flow into the second flow channel 12 via the narrow channel 13.

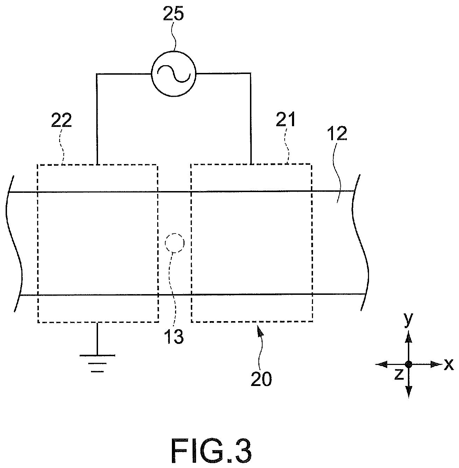

Fig. 3 is a plan view of the second flow channel 12 showing a vicinity of the narrow channel 13. The measurement electrode section 20 is arranged in the vicinity of the narrow channel 13. Specifically, the measurement electrode section 20 includes the measurement electrodes 21 and 22 provided so as to sandwich the narrow channel 13. The measurement electrodes 21 and 22 are provided on upper and lower surfaces of a center resin film 5 out of the resin films 3 to 7 laminated as shown in Fig. 2, for example, and constitute a parallel plate type capacitor. An AC power supply 25 is connected to the measurement electrodes 21 and 22, and a measurement voltage signal of a predetermined current of several ten to several hundred mV order is applied thereto. The measurement electrode 22 is a common electrode.

By separating the flow channel 10 into the first flow channel 11 and the second flow channel 12 in the flow channel device 50, it is possible to facilitate alignment of the particles C by a constant flow rate in the first flow channel 11 and the narrow channel 13 and dominantly determine a pressure gradient of the fluid in the second flow channel 12 with respect to the second flow channel 12. With this structure, since a stability of a fluid pressure at an outlet portion of the narrow channel 13 can be enhanced, the flow rate of the fluid that passes through the narrow channel 13 can be stabilized. As a result, the "return" phenomenon of the particles can be suppressed as will be described later, and a measurement accuracy of an electrical amount by the processing section 73 can be enhanced.

It should be noted that the terms "upper" and "lower" are irrelevant to the gravity direction. In the specification, the terms "upper" and "lower" are used merely for a descriptive convenience.

Further, although the width of the first flow channel 11 in the y direction is larger than that of the second flow channel 12 in the y direction in Fig. 1, the illustration is made to help understand the drawings, and the flow channels 11 and 12 basically have the same width.

Returning back to Fig. 1, the processing section 73 includes a measurement device 75 and an analysis section 74. The measurement device 75 generates a measurement voltage signal of a current within a predetermined frequency range to be described later using the AC power supply 25 and applies the voltage to the measurement electrode section 20. In this case, the measurement device 75 functions as a generation section that generates a measurement voltage signal. The measurement device 75 measures, while the measurement voltage signal is applied to the measurement electrode section 20, an electrical amount obtained when the particles pass through the narrow channel 13. In this case, the measurement device 75 functions as a measurement section that measures an electrical amount. Examples of the electrical amount include a current, a voltage, a resistivity, an impedance, an electrical conductivity, a conductance, and a complex value thereof.

The analysis section 74 includes a peak detector 76 and a histogram operation section 77, the detailed contents of which will be described later.

(Optimal frequency selection for measurement voltage signal by measurement device)

For example, in broad terms, blood cells as the particles are each a spherical body of about 10 $\mu$m, that has a conductive cell cytoplasm covered by an insulation cell membrane having a thickness of about 5 nm. In a case where such a structure is floating in a conductive liquid such as a blood plasma and a normal saline solution, that is, an electrolyte as the fluid, when an AC voltage is applied to the electrolyte to measure a permittivity and conductivity of the electrolyte, the following result can be obtained. The permittivity and conductivity are substantially constant when a frequency of the AC voltage is smaller than a range from a direct current to several hundred kHz and show prominent changes according to the frequency when the frequency is within a range of about several hundred kHz to several ten MHz. It should be noted that herein, a contribution of a DC conductivity is removed in advance.

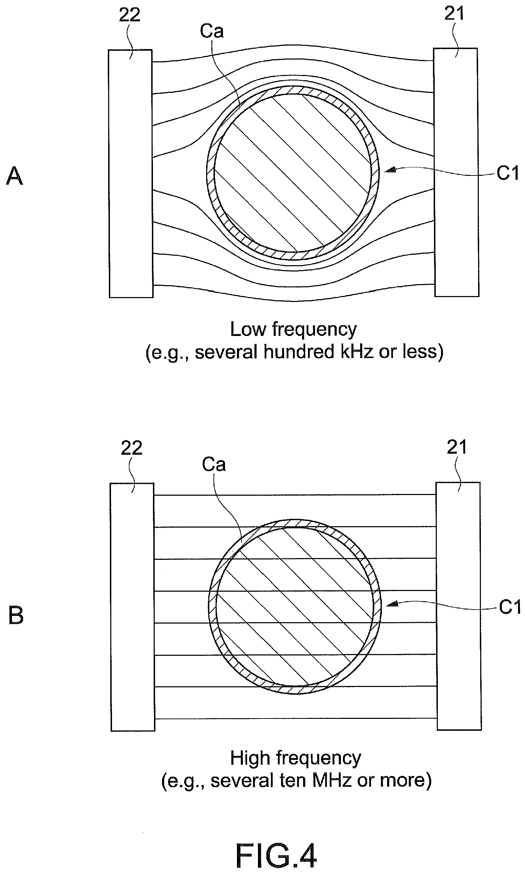

Fig. 4A schematically shows a state of an electrical force line in a case where, when a cell C1 in the electrolyte is present between electrodes such as the measurement electrodes 21 and 22, a measurement voltage of a low frequency range is applied between the electrodes. As described above, the cell C1 becomes an insulation body by a function of a cell membrane Ca in a low frequency range, and the conductivity between the electrodes takes a value onto which a cell size is reflected. On the other hand, as shown in Fig. 4B, when a measurement voltage of a high frequency range is applied between the electrodes, the insulation body function of the cell membrane Ca as described above is lost, and a current flows between the electrodes irrespective of the size of the cell C1.

Specifically, focusing on the permittivity, in a relatively low frequency range from a direct current to several hundred kHz or less, the cell membrane Ca functions as the insulation body. Therefore, a polarization occurs in the cell membrane Ca, and a constant permittivity is detected. On the other hand, in a relatively high frequency range of about several hundred kHz to several ten MHz, a charge of the cell membrane Ca cannot follow the switch of the electrical polarity, with the result that a phenomenon called dielectric relaxation in which a polarization function is relieved more as the frequency becomes higher (permittivity becomes lower) occurs. The conductivity shows the same change, but opposite to the permittivity, the conductivity becomes low in a range from a direct current to a low frequency range (substantially constant value) and becomes higher as the frequency becomes higher in a high frequency range.

A constant conductivity value in such a low frequency range in the electrolyte including cells, that is, a system of a suspension, reflects the outer shape of the cell, that is, the cell size, and the constant value takes different values depending on the cell size.

The present technique is a technique for accurately measuring, while suppressing generation of air bubbles that has been a problem of the technique of the related art, a conductivity (conductance) onto which the cell size is reflected using an AC voltage of a relatively low frequency range as described above. In addition, the present technique is capable of suppressing the return phenomenon of cells.

When S represents a cross-sectional area of a current pathway, l represents a length of the current pathway, and $\sigma$ represents a conductivity, the conductance G is expressed by G = ($\sigma$S)/l. Specifically, the conductance G and the conductivity $\sigma$ are mutually convertible, and the measurement of a "conductance" in the present technique is equivalent to the measurement of a "conductivity".

(Influence of electrical double layer)

When a measurement voltage of a low frequency range is used so that the cell size can be reflected onto the conductivity measurement result as described above, the following problem arises. An electrode pair in an electrolyte exerts a function as an electrical double layer capacitor, and since the electrical double layer capacitance is extremely large in general, it becomes difficult for a current caused by an AC voltage of a direct current-low frequency range to flow through a system including the electrical double layer. Therefore, when using a measurement voltage of a direct current-low frequency range, it is necessary to consider the conductance and capacitance including the influence of the electrical double layer in the system of the suspension.

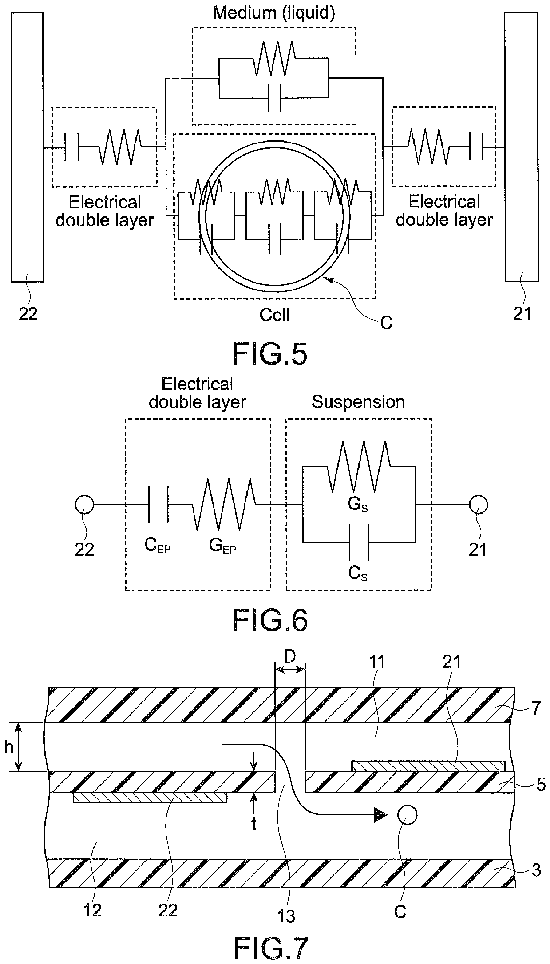

Fig. 5 shows an electrical equivalence circuit between the measurement electrodes in a case where an electrical double layer is caused. Fig. 6 is an equivalence circuit obtained by additionally simplifying the equivalence circuit shown in Fig. 5. In Fig. 6, the electrical double layer capacitance is represented by $C_{EP}$, a conductance thereof is represented by $G_{EP}$, the capacitance in the suspension system is represented by $C_S$, and a conductance thereof is represented by $G_S$. In the electrical double layer, $C_{EP}$ and $G_{EP}$ are connected in series, and in the electrolyte, $C_S$ and $G_S$ are connected in parallel.

The influence of the electrical double layer (electrode polarization relaxation) becomes a single relaxation curve with a characteristic frequency $f_{EP}$ defined by the following Expression (1).

[Expression 1]

$$f_c = \frac{1}{2\pi} \frac{G_s}{C_{EP}} \quad \cdot \cdot \cdot (1)$$

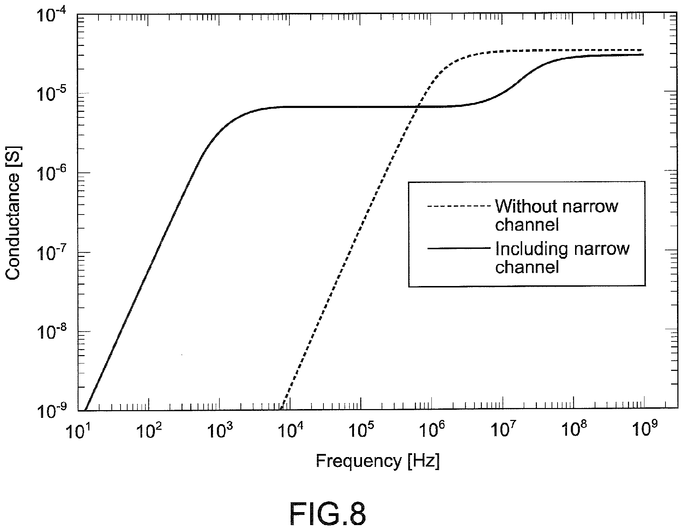

Therefore, it can be understood that the influence of the electrical double layer becomes relatively smaller as the frequency of the measurement voltage becomes higher than the characteristic frequency $f_{EP}$. Further, by setting the characteristic frequency $f_{EP}$ itself small, the frequency that can be used for the measurement can be shifted relatively toward the low frequency direction (see Fig. 8 to be described later). From Expression (1), by increasing $C_{EP}$ or decreasing $G_S$, the characteristic frequency $f_{EP}$ can be made small. For increasing $C_{EP}$, a surface area of the measurement electrodes only needs to be increased, or a micro-scale surface area including concavities and convexities of the measurement electrodes effectively contributing to the electrical double layer capacitance only needs to be increased.

(Optimal narrow channel structure)

From such a viewpoint, the flow channel device 50 of this embodiment includes the narrow channel 13, and a distance d between the measurement electrodes is set to be small. Fig. 7 is a schematic diagram showing an example of a size of the narrow channel structure. When a hole diameter of the narrow channel 13 is represented by D, a height of the first flow channel 11 and second flow channel 12 in the z direction is represented by h, and the thickness of the resin film is represented by t, the numerical values as follows can be adopted, for example.

D = 16 μm
h = 50 μm
t = 13 μm

The narrow channel structure is not limited to the values described above and can be set within a favorable range. In particular, the hole diameter D can be set to be 8 μm ≤ D ≤ 30 μm. When the hole diameter D is smaller than 8 μm, the possibility of the narrow channel 13 being blocked by the passing blood cells increases dramatically. On the other hand, when the hole diameter D is larger than 30 μm, a measurement accuracy requisite for distinguishing blood cells from others in terms of the size cannot be secured.

As the thickness t of the resin film, a value that is as small as possible while securing an electrical insulation property is selected in view of the measurement accuracy.

It should be noted that the content of the technique of the flow channel device 50 having the narrow channel structure is specifically disclosed in Japanese Patent Application Laid-open No. 2010-181399.

Fig. 8 is a graph showing a relationship between a frequency of the measurement voltage and a conductance of the entire system including the electrical double layer (equivalence circuit shown in Figs. 5 and 6) in a flow channel not including the narrow channel structure and a flow channel including the narrow channel structure as in this embodiment. The graph shows a conductance in a case where a normal saline solution is used as the electrolyte and particles do not exist in the narrow channel 13.

When considering the system including the electrical double layer, since the conductance becomes substantially constant irrespective of the frequency when the frequency is equal to or larger than a predetermined frequency (characteristic frequency of Expression (1) above), the conductance $G_S$ of the suspension system can be measured accurately in the constant conductance range. Particularly since the characteristic frequency can be shifted in the low frequency direction as described above in the case of the flow channel device 50 having the narrow channel structure, the conductance $G_S$ of the suspension system can be measured using a smallest possible frequency range. In the example shown in the graph, it can be seen that the electrical double layer does not affect frequencies of about 100 kHz or more.

(Optimal measurement voltage frequency)

Summarizing the descriptions above, an accurate conductance $G_S$ of the suspension system can be measured by generating a measurement voltage signal using a frequency that satisfies both the following conditions b) and c) with a condition a) being a precondition.

a) High frequency range in which an electrolysis does not occur
b) Low frequency range enough to acquire a conductance onto which a cell size can be reflected
c) Frequency range higher than characteristic frequency $f_{EP}$

The condition a) depends on the material of the measurement electrodes 21 and 22, the material of the fluid, and the measurement voltage. The conditions b) and c) depend on the structure of the flow channel device 50, the conductivity of the fluid, the type of cells, the cell state, and the material of the fluid.

For example, it is favorable for the cell to be a blood cell, a fluid to satisfy a physiological condition, and the structure and size of the flow channel device 50 to take the values (D, h, t) described above. When an electrical double layer capacitance per unit area of a metal surface as a general order is 10 mF/m², for example, the characteristic frequency $f_{EP}$ determined by Expression (1) becomes about 1 kHz. Therefore, as the frequency satisfying the conditions b) and c), it is desirable for the frequency to be within the range of 100 kHz or more and 500 kHz or less in view of a measurement accuracy.

Also when targeting a wider range of the cell type, the fluid material, and the structure of the flow channel device 50, the frequency range is basically 100 Hz or more and 1 MHz or less. As a metal material that satisfies the condition a) in this frequency range, a generally-used metal material (e.g., aluminum, copper, silver, and gold) can be used.

(Specifying of size and number of cells)

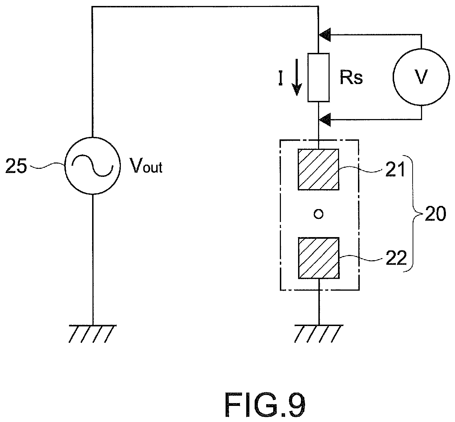

Fig. 9 shows a measurement circuit as an example of hardware included in the measurement device 75. The measurement circuit includes the AC power supply 25 described above and a resistor $R_S$ as a current detection passive device. As the passive device, a capacitor or an inductor may be used. The measurement electrode 21 of the measurement electrode section 20 is connected in series with the resistor $R_S$. By measuring a voltage V applied to the resistor $R_S$, a current (complex current) I that flows through the measurement circuit can be derived by $I = V/R_S$. Assuming that a voltage of a signal generated by the AC power supply 25 is represented by $V_{out}$, if the current I is obtained, the impedance in the measurement electrode section 20 (complex impedance) can be obtained by $(V_{out}-V)/I$. If the structure of the current pathway is known as described above, the conductance $G_S$ can be obtained from the current I.

When it is assumed that the particle is a sphere, a diameter d of the particle can be obtained by the following Relational Expression (2) using a function g from the measured conductance.

[Expression 2]

$$d = g\left(\frac{\Delta G}{G_b}, D, t, c\right) \quad \cdots (2)$$

    c: value unique to narrow channel, that expresses shape of narrow channel
    D: hole diameter of narrow channel
    t: flow channel length of narrow channel (thickness of resin film described above)

Here, the particle is assumed to be substantially spherical (equivalent volume sphere), and the diameter d is an equivalent diameter.

The function g is obtained as a regression expression using a numerical analysis, actual measurement data, and the like. $\Delta G$ and $G_b$ will be described later. Specifically, regarding Expression (2), the following Regression Expression (3) can be used.

[Expression 3]

$$\frac{d}{D} = a\left(\frac{\Delta G}{G_b}\right)^b \quad \cdots (3)$$

Parameters of D, t, c, g, x, y, and the like may be set when the flow channel device 50 is manufactured. When connecting a body of the apparatus (i.e., apparatus constituting processing section 73 or measurement control device 72) or the flow control mechanism 78 to the flow channel device 50, those parameters only need to be transmitted to the apparatus body side. In this case, a QR (Quick Response) code provided on the flow channel device 50, a package thereof, or the like only needs to include information on the parameters.

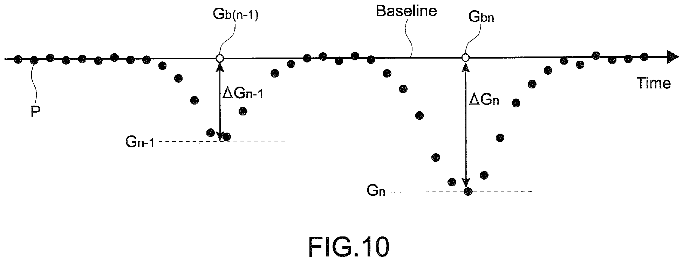

Fig. 10 is a schematic diagram showing a time-series waveform of measurement plots of the conductance monitored by the measurement device 75 and the analysis section 74. Measurement plots P of the conductance are illustrated as black dots.

As a plurality of particles sequentially pass through the narrow channel 13, a temporal waveform of the conductance obtained in time series expresses peaks ($G_1$, $G_2$, $\cdots$, $G_{n-1}$, $G_n$) every time individual particles pass. The peak detector 76 (see Fig. 1) carries out peak detection processing on the temporal waveform of the conductance to obtain a difference $\Delta G$ ($\Delta G_1$, $\Delta G_2$, ..., $\Delta G_{n-1}$, $\Delta G_n$) between a baseline value $G_b$ ($G_{b1}$, $G_{b2}$, ..., $G_{b(n-1)}$, $G_{bn}$) and a peak value ($G_1$, $G_2$, ..., $G_{n-1}$, $G_n$). Values on the baseline at times the peak values obtained by the extrapolation appear are indicated by white circles.

It should be noted that the peak detector 76 may detect the peaks in real time by hardware or may detect the peaks in post processing by software. As the peak detection method, there are various known methods including a peak value detection from a plurality of sampling values within a predetermined time, a detection of codes of differential values, and a detection by movement averaging processing, for example.

$\Delta G$ at a timing the particles pass through the narrow channel is converted into a cell diameter d by Expressions (2) or (3). The analysis section 74 collates data on a diameter range of various particles stored in advance in a memory with the diameter d obtained by the calculation and specifies to which stored diameter range the diameter d belongs, to thus specify a target particle type. The analysis section 74 can also specify the number of particles of the target type by counting the number of particles belonging to the target diameter range.

In addition, the histogram operation section 77 of the analysis section 74 counts the number of particles for each particle type and outputs a fractional histogram. Since the particle type is specified by calculating the diameter d, such a histogram can be obtained.

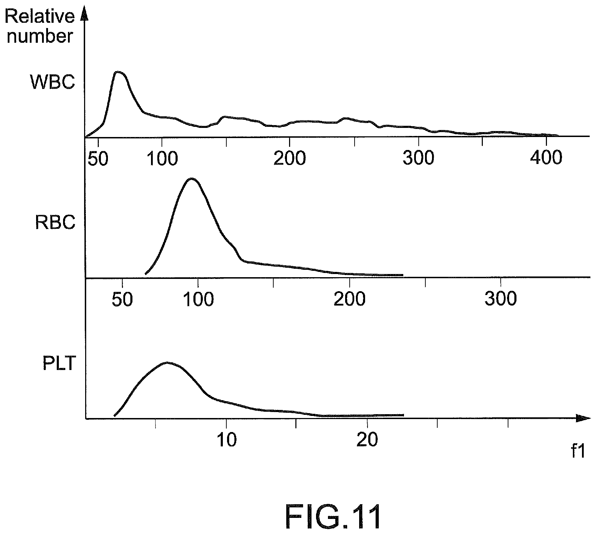

Fig. 11 shows an example of a histogram of various particles, blood cells herein, that is obtained by the histogram operation section 77. From the top, histograms of white blood cells (WBC: White Blood Cell), red blood cells (RBC: Red Blood Cell), and platelets (PLT: Platelet) are shown. The abscissa axis represents a volume (fl: femtoliter) of the various particles calculated from the diameter d. The ordinate axis represents the normalized number (relative number) of various particles. The abscissa axis may represent the diameter d itself instead of the particle volume.

As described above, the measurement apparatus 100 of this embodiment uses, as the measurement voltage, an AC voltage that has a frequency range in which the influence of the electrical double layer is reduced as much as possible and a low frequency range with which a conductance onto which the particle size can be reflected can be acquired. With this structure, the measurement apparatus 100 can use an AC voltage that does not cause an electrolysis instead of a DC voltage, and there is no need to detect a voltage fluctuation amount via an AC coupling capacitor as in the related art. Therefore, since generation of air bubbles is suppressed, a compact flow channel device 50 can be used. As a result of suppressing the generation of air bubbles, a flow of particles can be stabilized, and the measurement device 75 can accurately and stably measure the conductance and other electrical amounts.

In other words, even when a compact flow channel device that has a closed system and is formed of a microchip as in this embodiment is used, the conductance and other electrical amounts can be accurately and stably measured.

By using the compact flow channel device 50, the measurement apparatus 100 can be used at a bedside in a hospital, a clinic, a home of a user, and the like. Similarly, the measurement apparatus 100 can be readily used by a researcher at a laboratory.

By merely carrying out a predetermined operation using Expressions (2) and (3) based on the conductance measured by the measurement device 75, the measurement apparatus 100 of this embodiment can easily specify the number and type of particles.

As shown in Fig. 1, since the flow channel device 50 of this embodiment is connectable to the processing section 73 and the flow control mechanism 78, the flow channel device 50 can be easily exchanged or used as a disposable flow channel device 50. Therefore, even when the flow channel of the flow channel device 50 is blocked or broken during the measurement, a countermeasure such as an exchange of the flow channel device 50 can be readily taken. In addition, an individual flow channel device 50 can be used for each sample for preventing a contamination from being caused among samples.

(Suppression of "return" phenomenon of particles)

From the past, there has been a problem that a large number of particles already subjected to the measurement remain behind the orifice, and a quasi-signal is measured due to those particles returning in the vicinity of the orifice. For solving such a problem, there is disclosed an algorithm for removing such a quasi-signal from a measurement signal in, for example, Japanese Patent Application Laid-open No. Hei 7-37934. However, those operations have caused problems that an entire throughput is lowered, a small signal derived from an abnormal cell is erroneously removed, and the like.

In the flow channel device 50 of this embodiment, by splitting the flow channel 10 into the first flow channel 11 and the second flow channel 12 as described above, a stability of a fluid pressure at an outlet portion of the narrow channel 13 can be enhanced, with the result that the "return" phenomenon of the particles can be suppressed, and the measurement accuracy of the electrical amount by the measurement device 75 can be enhanced.

Specifically, the flow channel 10 forms a fluid flow (crossflow) in the second flow channel 12, that includes a velocity component orthogonal to the flow direction of the fluid including the particle C in the narrow channel 13 (z direction) (velocity component in horizontal direction; x component herein) as shown in Fig. 2. Accordingly, a flow manner after passing through the second flow channel 12 is dominated by the crossflow. As a result, the particle C that has exited the narrow channel 13 rapidly flows away from the narrow channel 13 to flow through the second flow channel 12, and thus it is possible to prevent the particles from returning in the vicinity of the narrow channel 13. In this case, it is favorable to make an adjustment such that a larger amount of fluid than that in the first flow channel 11 and the narrow channel 13 flows through the second flow channel 12. It is favorable to set a/b as a flow rate ratio of a first flow rate a and a second flow rate b to be set within the range of 1/2 to 1/50, for example.

Since the crossflow easily becomes turbulent on a surface of a macrocell as in the related art, the flow passing through the orifice becomes unstable, and the measurement accuracy is lowered. However, when the flow channel has the micro flow channel structure shown in Fig. 7, a Reynolds number calculated from the flow channel sizes is sufficiently small, and a laminar flow can be formed. Accordingly, the flow after passing through the second flow channel 12 is not affected by the upstream flow. Moreover, the flow channel device 50 of this embodiment is easily manufactured by laminating resin films such as a polyimide sheet while having the structure for the measurement.

In the structure of the flow channel 10 shown in Fig. 2, the velocity component of the flow in the second flow channel 12 is substantially only the component in the horizontal direction. However, it may also include a z component in addition to the horizontal component. It should be noted that in this case, the thickness of the flow channel device in the z direction becomes larger than that of the flow channel device 50 shown in Fig. 2.

[Another embodiment of flow channel]

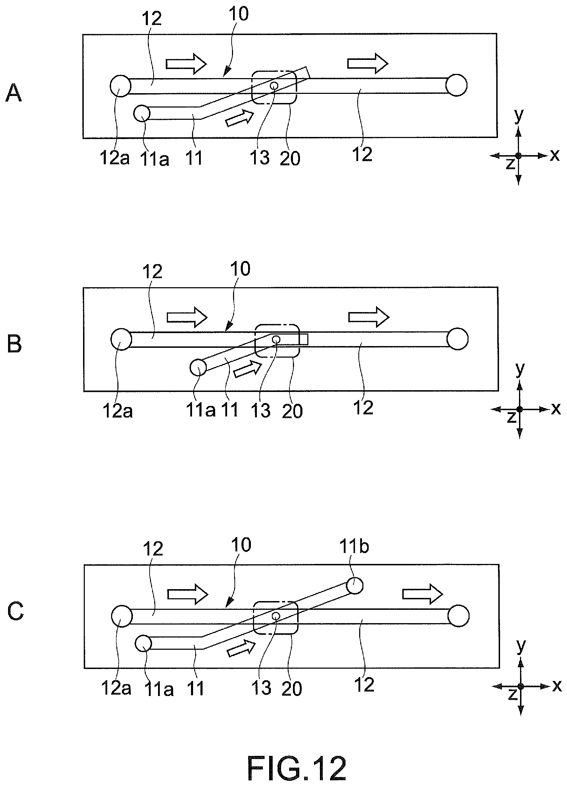

Fig. 12A is a schematic plan view showing a flow channel device according to another embodiment. In the flow channel device, a part of the first flow channel 11 is nonparallel with the second flow channel 12 when looking in the z direction. The first flow channel 11 forms an angle with respect to the second flow channel 12 at least in the vicinity of the narrow channel 13 when looking in the z direction.

In a flow channel device of the embodiment shown in Fig. 12B, a distance between the inlet 11a of the first flow channel 11 and the narrow channel 13 is shorter than that of the flow channel device shown in Fig. 12A. Moreover, the first flow channel 11 after the narrow channel 13 is parallel to the second flow channel 12.

Fig. 12C shows a structure in which the first flow channel 11 includes a discharge port 11b. Of course, the first flow channel 11 of the flow channel devices shown in Figs. 1 and 12B may also include such a discharge port 11b.

Without being limited to the structures shown in Figs. 12A and 12B, the first flow channel 11 and the second flow channel 12 may be orthogonal to each other when seen in the z direction at least in the vicinity of the narrow channel 13.

[Measurement apparatus according to second embodiment]

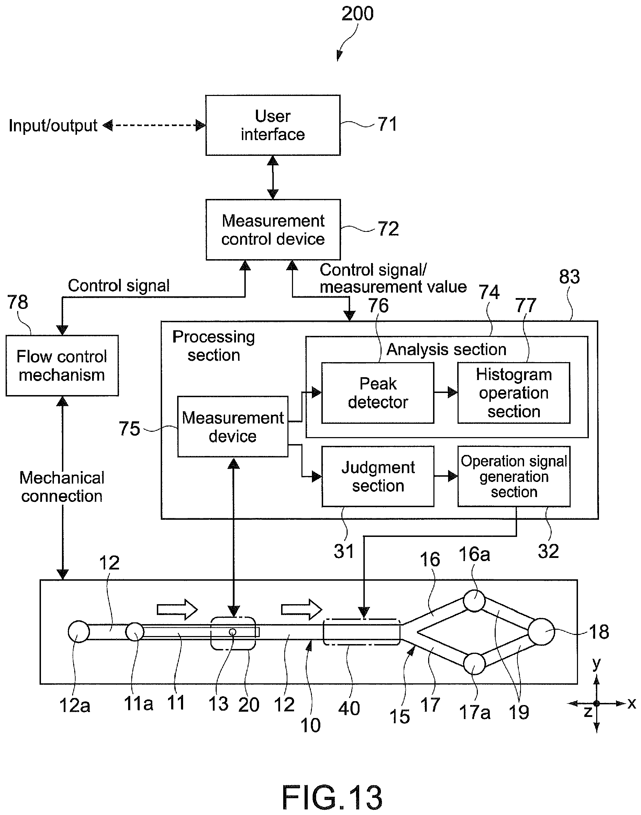

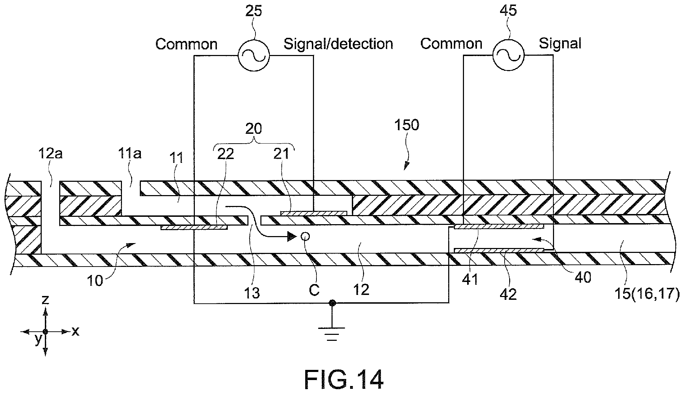

Fig. 13 is a block diagram showing a structure of a measurement apparatus according to a second embodiment of the present technique. Fig. 14 is a cross-sectional diagram of a flow channel device 150 of the measurement apparatus 200 taken along the x direction. In the descriptions hereinafter, descriptions on members, functions, and the like that are the same as those of the measurement apparatus 100 of the embodiment shown in Fig. 1 and the like will be simplified or omitted, and different points will mainly be described.

The flow channel device 150 of the measurement apparatus 200 includes a branch section 15 that branches from a downstream edge of the second flow channel 12, an operation electrode section 40 provided immediately before the branch section 15, and a discharge flow channel 19 and a discharge port 18 provided on a downstream side of the branch section 15. The branch section 15 includes a plurality of, for example, two, branch channels 16 and 17, and particle receivers 16a and 17a are respectively connected to downstream edges of the branch channels 16 and 17. The particle receivers 16a and 17a are connected to the discharge flow channel 19.

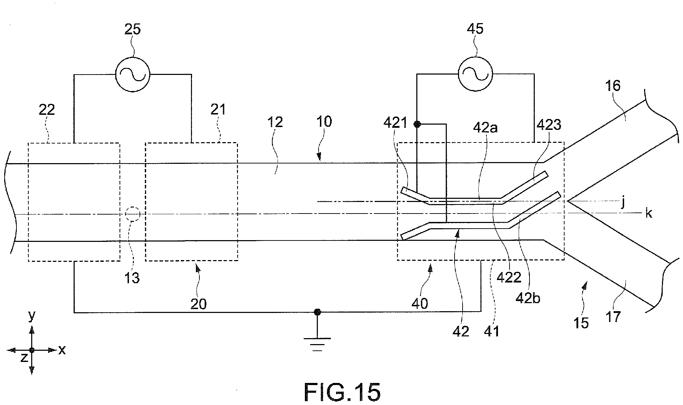

Fig. 15 is a plan view of the second flow channel 12 and the branch section 15 branched from the second flow channel 12. The narrow channel 13 is provided at a position deviated from a center of the second flow channel 12 (position of branch reference line j) in the y direction as a width direction, for example, a position on a line k.

As shown in Figs. 14 and 15, the operation electrode section 40 forms an electrical field having a predetermined electrical field intensity gradient and imparts a dielectrophoretic force to the particles flowing through the flow channel 10. The operation electrode section 40 includes a common electrode 41 provided at an upper portion of the second flow channel 12 and a guide electrode section 42 provided at a lower portion thereof. An AC power supply 45 is connected to the operation electrode section 40, and an AC operation voltage is applied between the common electrode 41 and the guide electrode section 42. The common electrode 41 functions as a ground electrode and is maintained at a ground potential (common potential).

The guide electrode section 42 typically includes a plurality of, for example, 2, thin long line electrodes 42a and 42b. For example, the branch section 15 is branched into the branch channels 16 and 17 at a position on the branch reference line j provided at substantially the center of the second flow channel 12 in the width direction (y direction). The guide electrode section 42 is provided at a position deviated in the y direction from the branch reference line j such that the line k described above is positioned between the line electrodes 42a and 42b, for example. With this structure, the particles that have flown into the second flow channel 12 via the narrow channel 13 flow in the x direction with the fluid to be introduced between the line electrodes 42a and 42b.

The guide electrode section 42 includes an introduction section 421, a straight section 422, and a direction change section 423. The introduction section 421 is formed such that the line electrodes 42a and 42b come closer to each other from the upstream side toward the downstream side. The straight section 422 is formed along the second flow channel 12, that is, formed parallel to the x direction. The direction change section 423 is formed such that the direction is changed from the straight section 422 toward the branch channel 16 as one of the branch channels. A voltage is applied to the line electrodes 42a and 42b so as to maintain the same potential.

When an AC operation voltage is applied to the operation electrode section 40, an operation electrical field is formed between the common electrode 41 and the guide electrode section 42. The operation electrical field imparts a dielectrophoretic force to the particles so that the particles flow between the line electrodes 42a and 42b. For example, an amplitude of the AC voltage to be applied to the operation electrode section 40 is 1 V to 30 V, and a frequency thereof is 1 kHz to 100 MHz. Accordingly, the pathway of the particles can be changed between a time a voltage is applied to the operation electrode section 40 and a time a voltage is not applied, and it is possible to selectively cause the particles to flow into either the branch channel 16 or 17.

As shown in Fig. 13, a processing section 83 includes, in addition to the measurement device 75 and the analysis section 74, a judgment section 31 and an operation signal generation section 32. The measurement device 75 of this embodiment calculates a complex impedance as a measurement target electrical amount from the current I described above. Specifically, the measurement device 75 calculates, with respect to individual cells flowing through the narrow channel 13, across multipoint frequencies (3 points or more, typically about 10 to 20) within the frequency range of 100 Hz or more and 1 MHz or less described above, a complex permittivity that depends on those cells. The measurement device 75 also measures electrical amounts other than the complex permittivity such as a conductance and a conductivity so that a histogram operation is carried out as in the first embodiment and outputs the electrical amount values to the analysis section 74.

It should be noted that the measurement device 75 calculates the complex permittivity using a known electrical conversion expression based on the complex impedance calculated as described above and acquires data including the complex permittivity.

As an amount electrically equivalent to the complex permittivity, there are a complex impedance, a complex admittance, a complex capacitance, a complex conductance, and the like. Those values can be mutually converted by a simple known electrical amount conversion described above. Moreover, the measurement of the complex impedance or complex permittivity also includes a measurement of only a real number portion or only an imaginary number portion.

The judgment section 31 acquires data output from the measurement device 75 and judges whether the particle is to be sorted, that is, whether the particle is to be guided to a predetermined one of the branch channels of the branch section 15 (branch channel 16 in this embodiment) based on the data. Specifically, the judgment section 31 carries out judgment processing by collating a judgment condition of data on the complex permittivity, that has been arbitrarily set in advance for sorting a desired particle in a memory, with the measurement data.

The operation signal generation section 32 generates an operation signal when the particle as a measurement target is a particle to be sorted (here, particle to be guided to branch channel 16) and does not generate an operation signal otherwise. It is also possible for the operation signal generation section 32 to not generate an operation signal when the particle as the measurement target is a particle to be sorted and generate an operation signal otherwise. The judgment section 31 and the operation signal generation section 32 function as a controller that controls sorting of particles based on the generation of an operation voltage signal.

By the operation electrode section 40 including the guide electrode section 42 (two line electrodes 42a and 42b) and one common electrode 41 opposing the guide electrode section 42, the following operation electrical field is generated. Specifically, an electrical field intensity gradient in the z direction is generated between the guide electrode section 42 and the common electrode 41, and an electrical field intensity gradient in the y direction is generated between the two line electrodes 42a and 42b.

The dielectrophoretic force is dominated by the electrical field intensity gradient, that is, a change in a density of the electrical force line (or electrical flux density). This point is different from the electrophoretic force generated in the direction along the electrical force line. In other words, the electrophoretic force is not always generated in the direction along the electrical force line. In this embodiment, since the two line electrodes 42a and 42b have substantially the same potential, an electrical field intensity gradient in which the line electrodes 42a and 42b act toward the center thereof (position of line k), that is, an electrical field intensity gradient in the y direction is generated. In this embodiment, it has been confirmed that the electrical field intensity gradient in the y direction is more precipitous than that in the z direction. Therefore, while the particle that has flown between the line electrodes 42a and 42b is temporarily imparted with the dielectrophoretic force in the z direction, the particle gradually approaches the guide electrode section 42 (moves away from common electrode 41) and is positioned on the line k as a center of the line electrodes 42a and 42b. As a result, also in the direction change section 423, the particle falls between the line electrodes 42a and 42b by the precipitous electrical field intensity gradient in the y direction. In other words, since the particle moves along the line electrodes 42a and 42b, the movement direction thereof can be changed.

It should be noted that the applicant specifically discloses a simulation of generation of a dielectrophoretic force by an operation electrical field in a different application.

In place of the operation electrode section 40, the operation electrode (voltage application section) and a voltage application method therefor disclosed in Japanese Patent Application Laid-open No. 2012-98075 (Figs. 3 to 12) may be adopted.

As described above, the measurement apparatus 200 of this embodiment includes the electrical amount measurement function in a desired frequency range and the function of suppressing the particle return phenomenon as in the measurement apparatus 100 according to the first embodiment. Therefore, since the measurement accuracy of the measurement device 75 can be enhanced, the judgment accuracy of the judgment section 31 can also be enhanced, and thus the particle sorting accuracy can be enhanced.

[Other embodiments]

The present technique is not limited to the embodiments described above, and various other embodiments can also be realized.

The analysis section of the processing section 83 according to the embodiment above may target only 1 type of particles as its counting target.

Alternatively, instead of specifying the particle type and counting them, the analysis section may analyze other characteristics of the particles based on the electrical amount measured by the measurement device 75.

The measurement circuit shown in Fig. 9 adopts the IV method to obtain a current flowing through the circuit. However, a TDR (Time Domain Reflectometry) method may be adopted instead.

It is also possible to combine at least two of the feature portions out of the feature portions of the embodiments described above.

Description of Symbols

| C | particle |
|---|---|
| 10 | flow channel |
| 11 | first flow channel |
| 12 | second flow channel |
| 13 | narrow channel |
| 20 | measurement electrode section |
| 21, 22 | measurement electrode |
| 50, 150 | flow channel device |
| 74 | analysis section |
| 75 | measurement device |
| 76 | peak detector |
| 77 | histogram operation section |
| 100, 200 | measurement apparatus |

**Claims**

1. A measurement apparatus, comprising:

a flow channel device (10) including a first flow channel (11), a second flow channel (12), and a narrow channel (13) through which particles pass by a flow of a fluid from the first flow channel to the second flow channel, and a measurement electrode section (20) comprising electrodes (21, 22) provided in the vicinity of the narrow channel;
a flow control mechanism (78) configured to pump a fluid not containing the particles to an input (12a) of the second flow channel, and to pump a fluid containing the particles to an input (11a) of the first flow channel;
a generation section that generates, in the flow channel device, an AC voltage, the AC voltage being generated in the measurement electrode section between the electrodes (21, 22); and
a measurement section that measures, while the AC voltage is applied to the measurement electrode section, at least the conductance between the electrodes (21, 22) obtained when the particles pass through the narrow channel,
wherein the AC voltage has a frequency that is higher than a characteristic frequency defined by a conductance of the fluid including the particles in the narrow channel and an electrical double layer capacitance formed by the measurement electrode section and is within a range such that the measured conductance reflects a size of the particles, and
wherein the flow channel device is configured such that the fluid flow in the second flow channel includes a velocity component orthogonal to the flow direction of the fluid including the particle in the narrow channel.

2. The measurement apparatus according to claim 1, wherein the measurement section includes a measurement circuit including the measurement electrode section and detects a current flowing through the measurement circuit to calculate the conductance of the fluid including the particles in the narrow channel based on the detected current.

3. The measurement apparatus according to claim 1, further comprising
an analysis section (74) that monitors a time elapse of the conductance and calculates the size of the particles based on a peak value of the conductance.

4. The measurement apparatus according to claim 3, wherein the analysis section calculates the size of the particles using a function that uses at least the conductance and the peak value of the conductance as a parameter.

5. The measurement apparatus according to claim 1, wherein the particles are blood cells of a living body, and
wherein the generation section generates an AC voltage having a frequency range of 100 Hz or more and 1 MHz or less.

6. The measurement apparatus according to claim 5, wherein the generation section generates an AC voltage having a frequency range of 100 kHz or more and 500 kHz or less.

7. The measurement apparatus according to claim 1, wherein the flow channel device further includes an operation electrode section (40) that causes a dielectrophoretic force to act on the particles in the second flow channel,

the measurement apparatus further comprising a controller that outputs an operation voltage signal to the operation electrode section based on the electrical amount measured by the measurement section.

8. A measurement method for measuring, using a flow channel device (10) including a first flow channel (11), a second flow channel (12), and a narrow channel (13) through which particles pass by a flow of a fluid from the first flow channel to the second flow channel and a measurement electrode section comprising electrodes (21, 22) provided in the vicinity of the narrow channel, an electrical amount of the narrow channel, the method comprising:

pumping a fluid containing the particles to an input (11a) of the first flow channel;

pumping a fluid not containing the particles to an input (12a) of the second flow channel;

generating, in the measurement electrode section between the electrodes (21, 22), an AC voltage; and

measuring, while the AC voltage is applied to the measurement electrode section, an electrical amount including at least the conductance between the electrodes (21, 22) obtained when the particles pass through the narrow channel, wherein the AC voltage has a frequency that is higher than a characteristic frequency defined by a conductance of the fluid including the particles in the narrow channel and an electrical double layer capacitance formed by the measurement electrode section and is within a range such that the measured conductance reflects a size of the particles, and

wherein the fluid flow in the second flow channel includes a velocity component orthogonal to the flow direction of the fluid including the particle in the narrow channel.

**Patentansprüche**

1. Messvorrichtung, umfassend:

eine Durchflusskanalvorrichtung (10), die einen ersten Durchflusskanal (11), einen zweiten Durchflusskanal (12) und einen engen Kanal (13) umfasst, durch welchen Teilchen durch einen Fluss von Flüssigkeit vom ersten Durchflusskanal zum zweiten Durchflusskanal durchtreten, und einen Messelektrodenabschnitt (20), der Elektroden (21, 22) umfasst, die in der Nachbarschaft des engen Kanals vorgesehen sind;

einen Durchflussregelungsmechanismus (78), der zum Pumpen einer Flüssigkeit, welche die Teilchen nicht enthält, zu einem Eingang (12a) des zweiten Durchflusskanals und zum Pumpen einer Flüssigkeit, welche die Teilchen enthält, zum einem Eingang (11a) des ersten Durchflusskanals ausgelegt ist;

einen Erzeugungsabschnitt, der in der Durchflusskanalvorrichtung eine WS-Spannung erzeugt, wobei die WS-Spannung im Meselektrodenabschnitt zwischen den Elektroden (21, 22) erzeugt wird; und

einen Messabschnitt, der während des Anlegens der WS-Spannung an den Messelektrodenabschnitt wenigstens die Konduktanz zwischen den Elektroden (21, 22) misst, die erhalten wird, wenn die Teilchen durch den engen Kanal durchtreten,

wobei die WS-Spannung eine Frequenz aufweist, die höher als eine charakteristische Frequenz ist, die durch eine Konduktanz der Flüssigkeit mit den Teilchen im engen Kanal und eine elektrische Doppelschichtkapazität definiert wird, die durch den Messelektrodenabschnitt gebildet wird, und innerhalb eines derartigen Bereichs ist, dass die gemessene Konduktanz eine Größe der Teilchen widerspiegelt, und

wobei die Durchflusskanalvorrichtung derart ausgelegt ist, dass der Flüssigkeitsfluss im zweiten Durchflusskanal eine Geschwindigkeitskomponente orthogonal auf die Durchflussrichtung der Flüssigkeit mit dem Teilchen im engen Kanal umfasst.

2. Messvorrichtung nach Anspruch 1, wobei der Messabschnitt eine Messschaltung umfasst, die den Messelektrodenabschnitt umfasst und einen Strom detektiert, der durch die Messschaltung fließt, um die Konduktanz der Flüssigkeit mit den Teilchen im engen Kanal basierend auf dem detektierten Strom zu berechnen.

3. Messvorrichtung nach Anspruch 1, ferner umfassend:

einen Analyseabschnitt (74), der ein Verstreichen einer Zeit der Konduktanz überwacht und die Größe der Teilchen basierend auf einem Spitzenwert der Konduktanz berechnet.

4. Messvorrichtung nach Anspruch 3, wobei der Analyseabschnitt die Größe der Teilchen unter Verwendung einer Funktion berechnet, die wenigstens die Konduktanz und einen Spitzenwert der Konduktanz als einen Parameter verwendet.

5. Messvorrichtung nach Anspruch 1, wobei die Teilchen Blutkörperchen eines lebenden Körpers sind, und

wobei der Erzeugungsabschnitt eine WS-Spannung mit einem Frequenzbereich von mindestens 100 Hz und höchstens 1 MHz erzeugt.

6. Messvorrichtung nach Anspruch 5, wobei der Erzeugungsabschnitt eine WS-Spannung mit einem Frequenzbereich von mindestens 100 kHz und höchstens 500 kHz erzeugt.

7. Messvorrichtung nach Anspruch 1, wobei die Durchflusskanalvorrichtung ferner einen Betriebselektrodenabschnitt (40) umfasst, der veranlasst, dass eine dielektrophoretische Kraft auf die Teilchen im zweiten Durchflusskanal wirkt, wobei die Messvorrichtung ferner umfasst: eine Steuerung, die ein Betriebsspannungssignal basierend auf dem elektrischen Betrag, der vom Messabschnitt gemessen wird, an den Betriebselektrodenabschnitt ausgibt.

8. Messverfahren zur Messung unter Verwendung einer Durchflusskanalvorrichtung (10), die einen ersten Durchflusskanal (11), einen zweiten Durchflusskanal (12) und einen engen Kanal (13) umfasst, durch welchen Teilchen durch einen Fluss von Flüssigkeit vom ersten Durchflusskanal zum zweiten Durchflusskanal durchtreten, und eines Messelektrodenabschnitts, der Elektroden (21, 22) umfasst, die in der Nachbarschaft des engen Kanals vorgesehen sind, eines elektrischen Betrags des engen Kanals, wobei das Verfahren umfasst:

Pumpen einer Flüssigkeit, welche die Teilchen enthält, zu einem Eingang (11a) des ersten Durchflusskanals;
Pumpen einer Flüssigkeit, welche die Teilchen nicht enthält, zu einem Eingang (12a) des zweiten Durchflusskanals;
Erzeugen einer WS-Spannung im Messelektrodenabschnitt zwischen den Elektroden (21, 22); und
Messen während des Anlegens der WS-Spannung an den Messelektrodenabschnitt eines elektrischen Betrags, der wenigstens die Konduktanz zwischen den Elektroden (21, 22) umfasst, die erhalten wird, wenn die Teilchen durch den engen Kanal durchtreten, wobei die WS-Spannung eine Frequenz aufweist, die höher als eine charakteristische Frequenz ist, die durch eine Konduktanz der Flüssigkeit mit den Teilchen im engen Kanal und eine elektrische Doppelschichtkapazität definiert wird, die durch den Messelektrodenabschnitt gebildet wird, und innerhalb eines derartigen Bereichs ist, dass die gemessene Konduktanz eine Größe der Teilchen widerspiegelt, und wobei der Flüssigkeitsfluss im zweiten Durchflusskanal eine Geschwindigkeitskomponente orthogonal auf die Durchflussrichtung der Flüssigkeit mit dem Teilchen im engen Kanal umfasst.

## Revendications

1. Appareil de mesure, comprenant :

un dispositif de canal d'écoulement (10) comprenant un premier canal d'écoulement (11), un second canal d'écoulement (12), et un canal étroit (13) à travers lequel des particules passent par un écoulement d'un fluide du premier canal d'écoulement au second canal d'écoulement, et une section d'électrodes de mesure (20) comprenant des électrodes (21, 22) pourvues au voisinage du canal étroit ;
un mécanisme de contrôle d'écoulement (78) configuré pour pomper un fluide ne contenant pas les particules vers une entrée (12a) du second canal d'écoulement, et pour pomper un fluide contenant les particules vers une entrée (11a) du premier canal d'écoulement ;
une section de génération qui génère, dans le dispositif de canal d'écoulement, une tension alternative, la tension alternative étant générée dans la section d'électrodes de mesure entre les électrodes (21, 22) ; et
une section de mesure qui mesure, pendant que la tension alternative est appliquée à la section d'électrodes de mesure, au moins la conductance entre les électrodes (21, 22) obtenue lorsque les particules traversent le canal étroit, où la tension alternative a une fréquence qui est supérieure à une fréquence caractéristique définie par une conductance du fluide comprenant les particules dans le canal étroit et une capacitance électrique à double couche formée par la section d'électrodes de mesure et se situe dans une plage telle que la conductance mesurée reflète une taille des particules, et où le dispositif de canal d'écoulement est configuré de manière à ce que l'écoulement du fluide dans le second canal d'écoulement comprenne une composante de vitesse orthogonale à la direction d'écoulement du fluide comprenant les particules dans le canal étroit.

2. Appareil de mesure selon la revendication 1, dans lequel la section de mesure comprend un circuit de mesure comprenant la section d'électrodes de mesure et détecte un courant s'écoulant à travers le circuit de mesure pour calculer la conductance du fluide comprenant les particules dans le canal étroit sur la base du courant détecté.

3. Appareil de mesure selon la revendication 1, comprenant en outre :
une section d'analyse (74) qui surveille la durée de la conductance et calcule la taille des particules sur la base d'une valeur de crête de la conductance.

4. Appareil de mesure selon la revendication 3, dans lequel la section d'analyse calcule la taille des particules en utilisant une fonction qui utilise au moins la conductance et la valeur de crête de la conductance comme paramètre.

5. Appareil de mesure selon la revendication 1, dans lequel les particules sont des cellules sanguines d'un corps vivant, et
dans lequel la section de génération génère une tension alternative ayant une plage de fréquences de 100 Hz ou plus à 1 MHz ou moins.

6. Appareil de mesure selon la revendication 5, dans lequel la section de génération génère une tension alternative ayant une plage de fréquences de 100 kHz ou plus à 500 kHz ou moins.

7. Appareil de mesure selon la revendication 1, dans lequel le dispositif de canal d'écoulement comprend en outre une section d'électrode de fonctionnement (40) qui amène une force diélectrophorétique à agir sur les particules dans le second canal d'écoulement,
l'appareil de mesure comprenant en outre :
un contrôleur qui délivre en sortie un signal de tension de fonctionnement à la section d'électrode de fonctionnement sur la base de la quantité électrique mesurée par la section de mesure.

8. Procédé de mesure pour mesurer, au moyen d'un dispositif de canal d'écoulement (10) comprenant un premier canal d'écoulement (11), un second canal d'écoulement (12) et un canal étroit (13) à travers lequel des particules passent par un écoulement d'un fluide du premier canal d'écoulement au second canal d'écoulement, et une section d'électrodes de mesure comprenant des électrodes (21, 22) pourvues au voisinage du canal étroit, une quantité électrique du canal étroit, le procédé comprenant les étapes suivantes :

pomper un fluide contenant les particules vers une entrée (11a) du premier canal d'écoulement ;
pomper un fluide ne contenant pas les particules vers une entrée (12a) du second canal d'écoulement ;
générer, dans la section d'électrodes de mesure entre les électrodes (21, 22), une tension alternative ; et
mesurer, pendant que la tension alternative est appliquée à la section d'électrodes de mesure, une quantité électrique comprenant au moins la conductance entre les électrodes (21, 22) obtenue lorsque les particules traversent le canal étroit,
où la tension alternative a une fréquence qui est supérieure à une fréquence caractéristique définie par une conductance du fluide comprenant les particules dans le canal étroit et une capacitance électrique à double couche formée par la section d'électrodes de mesure et se situe dans une plage telle que la conductance mesurée reflète une taille des particules, et
où l'écoulement du fluide dans le second canal d'écoulement comprend une composante de vitesse orthogonale à la direction d'écoulement du fluide comprenant les particules dans le canal étroit.

100

Input/output ◄ - - - - - - - ► | User interface |～71

| Measurement control device |～72

78     Control signal     Control signal/ measurement value    74    73

| Flow control mechanism |

Processing section

75 | Measurement device |

Analysis section

| Peak detector | → | Histogram operation section |

76       77

Mechanical connection

Electrical connection

12            10        50

12a   11a   11   13   20     12      12b

y
z   x

FIG.1

FIG.2

EP 2 980 558 B1

**FIG.3**

17

A

Low frequency
(e.g., several hundred kHz or less)

B

High frequency
(e.g., several ten MHz or more)

FIG.4

**FIG.5**

**FIG.6**

**FIG.7**

FIG.8

FIG.9

FIG.10

FIG.11

FIG.12

FIG.13

FIG.14

FIG.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2815435 A
- EP 2378283 A1
- JP 2010181399 A
- JP HEI737934 B
- JP 2012098075 A

**Non-patent literature cited in the description**

- **HOLMES D et al.** Label-free Differential Leukocyte Counts Using a Microfabricated, Single-Cell Impedance Spectrometer. *SENSORS 2007 IEEE*
- **Y KATSUMOTO et al.** Single Cell Dielectric Spectroscopy in a Micro-Channel. *15th Int. Conf. on Miniaturized Systems for Chemistry and Life Sciences,* 02 October 2011